# EUROPÄISCHE PATENTSCHRIFT

(11) **EP 2 948 739 B1**
(45) Veröffentlichungstag und Bekanntmachung des Hinweises auf die Patenterteilung: **13.09.2017**
(21) Anmeldenummer: 14701701.6
(22) Anmeldetag: 21.01.2014
(51) Int. Cl.: G06F 3/048, G01C 21/36

(54) **VERFAHREN UND VORRICHTUNG ZUM BETREIBEN EINER NAVIGATIONSEINRICHTUNG**
METHOD AND DEVICE FOR OPERATING A NAVIGATION DEVICE
PROCÉDÉ ET DISPOSITIF POUR FAIRE FONCTIONNER UN SYSTÈME DE NAVIGATION

(30) Priorität: 23.01.2013 DE 102013201019
(43) Veröffentlichungstag der Anmeldung: 02.12.2015
(73) Patentinhaber: Bayerische Motoren Werke Aktiengesellschaft, 80809 München (DE)
(72) Erfinder: TAVA, Marcello, 81369 München (DE)
(86) Internationale Anmeldenummer: PCT/EP2014/051078
(87) Internationale Veröffentlichungsnummer: WO 2014/114613

(56) Entgegenhaltungen:
- GB-A- 2 416 844
- US-A1- 2010 030 612
- US-A1- 2011 208 428
- "User's manual NAVIGON 81xx English (United Kingdom)", , April 2008 (2008-04), XP055114572, Gefunden im Internet: URL:http://www.navigon.com/portal/common/D ownload/Manual/PNA/Navigon8110/English_man ual.pdf [gefunden am 2014-04-17]

## Beschreibung

Die Erfindung betrifft ein Verfahren und eine Vorrichtung zum Betreiben einer Navigationseinrichtung.

Navigationseinrichtungen, insbesondere Navigationseinrichtungen in Fahrzeugen, können einen Fahrzeugführer unterstützen, um an ein gewünschtes Ziel zu gelangen. Die Bedienung der Navigationseinrichtung kann allerdings gerade beim Fahren des Fahrzeugs den Fahrzeugführer ablenken

Das Dokument "User's manual NAVIGON 81xx English (United Kingdom", April 2008; abgerufen am 17. April 2014 unter http:// WwW.navigon.com/portal/common/Download/Manual/PNA/Navigon 8110/ English_manual.pdf offenbart die Bedienung eines Navigationsgerätes mit Touch Screens. Sofern eine Karte angezeigt wird, kann mit Berührung der Karte ein Funktionsmenü aufgerufen werden. Das Dokument US 2011/0208428 A1 offenbart eine Navigationsvorrichtung, die dazu dient eine Karte mit der eigenen Fahrzeugposition anzuzeigen. Bei Berührung der Fahrzeugposition wird ein Graph mit dem Fahrzeugverbrauch angezeigt. Die Aufgabe, die der Erfindung zugrunde liegt, ist ein Verfahren beziehungsweise eine Vorrichtung zum Betreiben einer Navigationseinrichtung zu schaffen, das beziehungsweise die dazu beiträgt, dass eine intuitive Bedienung der Navigationseinrichtung ermöglicht wird.

Die Aufgabe wird gelöst durch die Merkmale der unabhängigen Patentansprüche. Vorteilhafte Ausgestaltungen sind in den Unteransprüchen gekennzeichnet.

Die Erfindung zeichnet sich aus durch ein Verfahren beziehungsweise durch eine korrespondierende Vorrichtung zum Betreiben einer Navigationseinrichtung, bei dem Visualisierungsdaten bereitgestellt werden zum Anzeigen auf einer Anzeigeeinheit. Die Visualisierungsdaten weisen Daten auf zum Anzeigen einer Karte und eines Fahrzeugsymbols. Ein erster Bedienbereich wird einem vorgegebenen Bereich auf der Anzeigeeinheit um das signalisierte Fahrzeugsymbol zugeordnet. Ein zweiter Bedienbereich wird einem vorgegebenen Bereich auf der Anzeigeeinheit der restlichen signalisierten Karte außerhalb des ersten Bedienbereichs zugeordnet. Abhängig von einer Auswahl des jeweiligen Bedienbereichs werden jeweils zugehörige Funktionsdaten bereitgestellt zum Anzeigen auf der Anzeigeeinheit. Die Funktionsdaten weisen Daten zum Anzeigen von Bedienelementen auf, die von einem Nutzer auswählbar sind. Den Bedienelementen sind dem jeweiligen Bedienbereich zugehörige Funktionen zugeordnet.

Der erste Bedienbereich ist beispielsweise ein kreisförmiger Bereich um das angezeigte Fahrzeugsymbol. Der Durchmesser des Kreises ist beispielsweise so gewählt, dass eine zuverlässige Auswahl des ersten Bedienbereichs während der Fahrt ermöglicht wird.

Mittels der Anzeige eines Fahrzeugsymbols und einer Karte auf einer Anzeigeeinheit einer Navigationseinrichtung erhält ein Fahrzeugführer eine visuelle Unterstützung. Indem jeweils dem ersten Bedienbereich um das Fahrzeugsymbol zugehörige Funktionen zugeordnet sind und dem zweiten Bedienbereich der restlichen signalisierten Karte zugehörige Funktionen zugeordnet sind, ist eine intuitive Auswahl der Funktionen, die dem jeweiligen Bedienbereich zugeordnet sind, möglich.

Gemäß einer vorteilhaften Ausgestaltung repräsentieren die dem ersten Bedienbereich zugehörigen Funktionen Fahrzeug- und Umgebungsfunktionen zum Einstellen von fahrzeug- und umgebungsrelevanten Optionen der Navigationseinrichtung. Die dem zweiten Bedienbereich zugehörigen Funktionen repräsentieren Kartenfunktionen zum Einstellen von Kartenoptionen der Navigationseinrichtung.

Hierdurch kann durch eine Auswahl des ersten Bedienbereichs einfach und schnell eine fahrzeug- und umgebungsrelevante Option der Navigationseinrichtung eingestellt werden, beziehungsweise durch eine Auswahl des zweiten Bedienbereichs einfach und schnell eine Kartenoption der Navigationseinrichtung eingestellt werden.

Gemäß einer weiteren vorteilhaften Ausgestaltung weisen die Visualisierungsdaten Daten zum Anzeigen einer Fahrzeugroute auf. Ein dritter Bedienbereich wird einem vorgegebenen Bereich auf der Anzeigeeinheit um die signalisierte Fahrzeugroute außerhalb des ersten Bedienbereichs zugeordnet. Der zweite Bedienbereich wird einem vorgegebenen Bereich der restlichen signalisierten Karte außerhalb des ersten und des dritten Bedienbereichs zugeordnet. Bei einer Auswahl des dritten Bedienbereichs werden zugehörige Funktionsdaten bereitgestellt zum Anzeigen auf der Anzeigeeinheit, wobei die Funktionsdaten Daten zum Anzeigen von Bedienelementen aufweisen, die von einem Nutzer auswählbar sind, wobei den Bedienelementen dem dritten Bereich zugehörige Funktionen zugeordnet sind.

Der zugeordnete vorgegebene Bereich ist beispielsweise ein Korridor mit einem vorgegebenen Durchmesser um die signalisierte Fahrzeugroute, wobei der Durchmesser des Korridors beispielsweise derart vorgegeben wird, dass eine zuverlässige Auswahl des dritten Bedienbereichs während der Fahrt ermöglicht ist. Hierdurch ist zusätzlich ein einfaches Einstellen von der Fahrzeugroute zugeordneten Funktionen möglich.

Gemäß einer weiteren vorteilhaften Ausgestaltung repräsentieren die dem dritten Bedienbereich zugehörigen Funktionen Routenfunktionen zum Einstellen von Routenoptionen der Navigationseinrichtung. Hiermit sind zusätzlich Routenoptionen intuitiv auswählbar durch eine Auswahl des dritten Bedienbereichs.

Gemäß einer weiteren vorteilhaften Ausgestaltung ist die Anzeigeeinheit als berührungsempfindlicher Bildschirm ausgebildet und die Auswahl des jeweiligen Bedienbereichs erfolgt mittels Berührung des jeweiligen Bedienbereichs auf dem berührungsempfindlichen Bildschirm. Gerade mittels eines berührungsempfindlichen Bildschirms ist eine einfache und intuitive Bedienung der Navigationseinrichtung möglich. Hierbei wird ein elektrisches Signal bei Berührung des Bildschirms erzeugt, mittels dessen die Position der Berührung ermittelt werden kann. Abhängig von dem elektrischen Signal kann daraufhin eine Zuordnung zu dem jeweiligen Bedienbereich erfolgen.

Ausführungsbeispiele der Erfindung sind im Folgenden anhand der schematischen Zeichnungen näher erläutert.

Es zeigen:
- Figur 1: eine Anzeigeeinheit und eine Steuervorrichtung und
- Figur 2: ein Ablaufdiagramm eines Programms, das in der Steuervorrichtung abgearbeitet wird.

Elemente gleicher Konstruktion oder Funktion sind figurenübergreifend mit den gleichen Bezugszeichen gekennzeichnet.

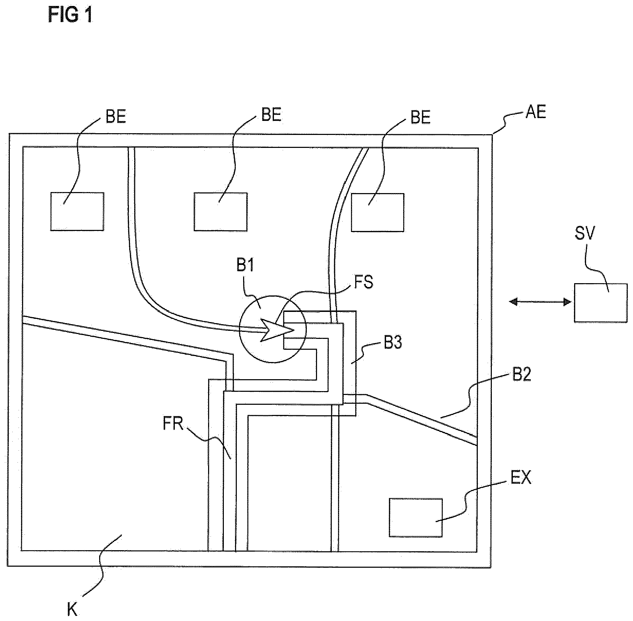

Figur 1 zeigt eine Anzeigeeinheit AE. Mittels der Anzeigeeinheit AE ist eine Karte K mit Straßen signalisiert. Außerdem ist ein Fahrzeugsymbol FS signalisiert sowie eine Fahrzeugroute FR. Bei dem Fahrzeugsymbol FS handelt es sich beispielsweise um einen Pfeil und/oder einen Kreis. Um das Fahrzeugsymbol FS ist ein kreisförmiger erster Bedienbereich B1 gezeigt. Ein zweiter Bedienbereich B2 ist in der restlichen Karte K außerhalb des ersten Bedienbereichs B1 und außerhalb eines dritten Bedienbereichs B3 gezeigt. Der dritte Bedienbereich B3 bildet einen Korridor um die Fahrzeugroute FR. Des Weiteren sind mehrere Bedienelemente BE abgebildet. Außerdem ist ein Exit-Bedienelement EX abgebildet.

Die Anzeigeeinheit AE ist signaltechnisch gekoppelt mit einer Steuervorrichtung SV, sodass sie Daten von der Steuervorrichtung SV empfangen kann, um diese anzuzeigen. Die Anzeigeeinheit AE ist beispielsweise als berührungsempfindlicher Bildschirm ausgebildet. Die Anzeigeeinheit AE kann auch Daten an die Steuervorrichtung SV senden. Diese gesendeten Daten repräsentieren beispielsweise den Punkt oder den Bereich, an dem der berührungsempfindliche Bildschirm berührt wird.

Die Steuervorrichtung SV umfasst eine Recheneinheit, einen Daten und Programmspeicher und eine Schnittstelle, mittels der sie signaltechnisch gekoppelt ist mit der Anzeigeeinheit AE zum Senden und Empfangen von Daten.

Bevorzugt ist die Steuervorrichtung SV in einem Fahrzeug angeordnet. Grundsätzlich kann sie fest in dem Fahrzeug angeordnet sein, sie kann jedoch auch beispielsweise in einem mobilen Endgerät, wie beispielsweise einem Smartphone oder dergleichen, ausgebildet sein.

Die Steuervorrichtung SV kann auch als Vorrichtung zum Betreiben einer Navigationseinrichtung bezeichnet werden.

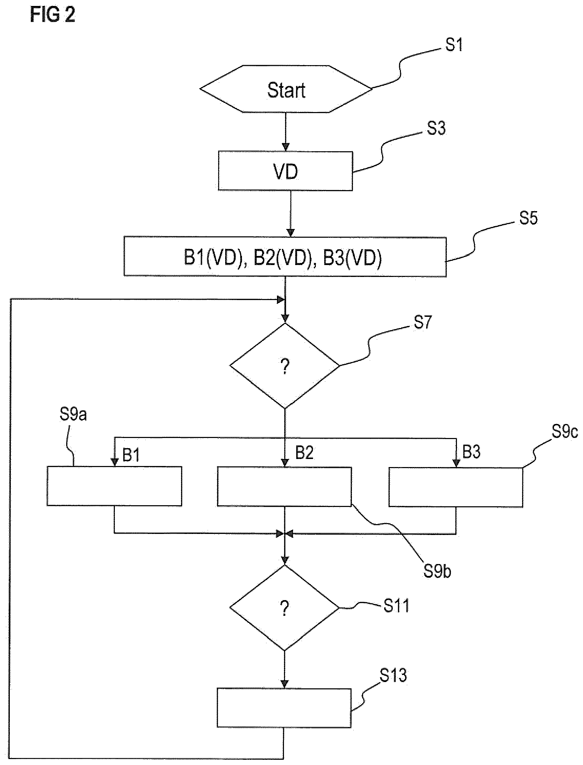

Zum Betreiben der Navigationseinrichtung ist in dem Daten und Programmspeicher der Steuervorrichtung SV bevorzugt zumindest ein Programm abgespeichert, das während des Betriebs der Navigationseinrichtung abgearbeitet werden kann. Das Programm ist im Folgenden anhand des Ablaufdiagramms der Figur 2 näher erläutert.

Das Programm, das in der Steuervorrichtung SV abgearbeitet wird, wird in einem Schritt S1 gestartet, in dem gegebenenfalls Variablen initialisiert werden können.

In einem Schritt S3 werden Visualisierungsdaten VD bereitgestellt zum Anzeigen auf der Anzeigeeinheit AE. Die Visualisierungsdaten VD weisen beispielsweise Daten zum Anzeigen der Karte K und/oder des Fahrzeugsymbols FS und/oder der Fahrzeugroute FR auf.

In einem Schritt S5 wird ein erster Bedienbereich B1 einem vorgegebenen Bereich auf der Anzeigeeinheit AE um das signalisierte Fahrzeugsymbol FS zugeordnet. Der erste Bedienbereich B1 ist beispielsweise ein kreisförmiger Bereich auf der Anzeigeeinheit AE, mit einem Radius, bei dem sichergestellt ist, dass ein Fahrzeugführer den ersten Bedienbereich B1 zuverlässig während der Fahrt auswählen kann.

Es wird außerdem ein zweiter Bedienbereich B2 einem vorgegebenen Bereich auf der Anzeigeeinheit AE der restlichen signalisierten Karte K außerhalb des ersten Bedienbereichs B1 und außerhalb eines dritten Bedienbereichs B3 zugeordnet.

Der dritte Bedienbereich B3 wird einem vorgegebenen Bereich auf der Anzeigeeinheit AE um die signalisierte Fahrzeugroute FR außerhalb des ersten Bedienbereichs B1 zugeordnet. Der dritte Bedienbereich B3 wird gegebenenfalls nach einer Anforderung einer Routenberechnung zur Berechnung einer Zielroute zugeordnet. Der dritte Bedienbereich B3 ist beispielsweise ein Korridor mit einem vorgegebenen Durchmesser um die signalisierte Fahrzeugroute FR, wobei der Durchmesser beispielsweise derart vorgegeben ist, dass sichergestellt ist, dass eine Auswahl des dritten Bedienbereichs B3 zuverlässig bei der Fahrt erfolgen kann. Der Durchmesser ist so beispielsweise auf einen typischen Berührungsbereich eines Zeigefingers abgestimmt, gegebenenfalls unter Berücksichtigung eines vorgegebenen Abweichungsbereichs, der derart vorgegeben ist, dass der Fahrzeugführer zuverlässig den jeweiligen Bedienbereich auswählen kann ohne seine Aufmerksamkeit in unangemessener Weise vom Verkehrsgeschehen wegzurichten.

Der erste Bedienbereich B1 und/oder der zweite Bedienbereich B2 und/oder der dritte Bedienbereich B3 sind bevorzugt nicht auf der Anzeigeeinheit AE sichtbar, sondern nur hinterlegt. Es ist allerdings auch möglich, dass der erste Bedienbereich B1 und/oder der zweite Bedienbereich B2 und/oder der dritte Bedienbereich B3 auf der Anzeigeeinheit AE sichtbar sind.

In einem Schritt S7 wird überprüft, welcher Bedienbereich B1, B2, B3 von einem Fahrzeugführer, beispielsweise mittels Berührung des jeweiligen Bedienbereichs B1, B2, B3 auf der der Anzeigeeinheit AE, ausgewählt wurde. Wurde der erste Bedienbereich B1 ausgewählt, so wird das Programm in dem Schritt S9a fortgeführt. Wurde der zweite Bedienbereich B2 ausgewählt, so wird das Programm in dem Schritt S9b fortgeführt. Wurde der dritte Bedienbereich B3 ausgewählt, so wird das Programm in dem Schritt S9c fortgeführt.

In dem Schritt S9a werden Funktionsdaten bereitgestellt zum Anzeigen auf der Anzeigeeinheit AE, wobei die Funktionsdaten Daten zum Anzeigen von Bedienelementen BE aufweisen, die von einem Nutzer auswählbar sind. Den Bedienelementen BE sind Funktionen zugeordnet, die Fahrzeug- und Umgebungsfunktionen repräsentieren zum Einstellen von fahrzeug- und umgebungsrelevanten Optionen der Navigationseinrichtung. Derartige Funktionen sind beispielsweise das Aktivieren oder Desaktivieren einer Führungsfunktion und/oder das Aktivieren eines Untermenüs, in dem nach interessanten Punkten in der Nähe des Fahrzeugs gesucht werden kann und/oder eine Funktion, die ein Menü aufruft, in dem eine Zielposition eingegeben werden kann und/oder eine Informationsfunktion, die eine Informationsbox über die aktuelle Fahrzeugposition öffnet. Die Bedienelemente BE können beispielsweise auf der signalisierten Karte K eingeblendet werden, wie in der Figur 1 zu sehen ist. Alternativ oder zusätzlich ist es möglich, dass bei der Auswahl des ersten Bedienbereichs B1 ein Menü geöffnet wird, das die Bedienelemente BE anzeigt. Zusätzlich kann das Exit-Bedienelement EX eingeblendet werden.

In dem Schritt S9b werden Funktionsdaten bereitgestellt zum Anzeigen auf der Anzeigeeinheit AE, wobei die Funktionsdaten Daten zum Anzeigen von Bedienelementen BE aufweisen, die von dem Nutzer auswählbar sind, wobei den Bedienelementen BE Funktionen zugeordnet sind, die Kartenfunktionen repräsentieren zum Einstellen von Kartenoptionen der Navigationseinrichtung. Derartige Kartenfunktionen sind beispielsweise das Umschalten der signalisierten Karte K von einer genordeten Karte K in eine fahrzeugausgerichtete Karte K und umgekehrt und/oder das Umschalten von 2D auf 3D und umgekehrt und/oder das Ein- und Ausschalten von Verkehrsinformationen auf der signalisierten Karte K und/oder das Umschalten von einem Tag- in einen Nachtmodus und umgekehrt, um die Farben der signalisierten Karte K an den Tag oder an die Nacht anzupassen. Die Bedienelemente BE können beispielsweise auf der signalisierten Karte K eingeblendet werden, wie in der Figur 1 zu sehen ist. Alternativ oder zusätzlich ist es möglich, dass bei der Auswahl des zweiten Bedienbereichs B2 ein Menü geöffnet wird, das die Bedienelemente BE anzeigt. Zusätzlich kann das Exit-Bedienelement EX eingeblendet werden.

In dem Schritt S9c werden Funktionsdaten bereitgestellt zum Anzeigen auf der Anzeigeeinheit AE, wobei die Funktionsdaten Daten zum Anzeigen von Bedienelementen BE aufweisen, die von einem Nutzer auswählbar sind, wobei den Bedienelementen BE Funktionen zugeordnet sind, die Routenfunktionen repräsentieren zum Einstellen von Routenoptionen der Navigationseinrichtung. Derartige Routenfunktionen sind beispielsweise die Auswahl einer schnellen Route, mittels der die Route optimiert wird auf eine möglichst geringe Fahrtdauer und/oder die Auswahl einer kurzen Route, mittels der die Route optimiert wird auf eine möglichst kurze Strecke und/oder die Auswahl einer Ökoroute, mittels der die Route optimiert wird auf Benzin oder Energieverbrauch und/oder eine Funktion, die ein Menü öffnet, in dem eingestellt werden kann, ob spezielle Verkehrsmittel vermieden werden sollen, wie beispielsweise Autobahnen und/oder Zollstraßen und/oder vignettenpflichtige Straßen und/oder Fähren und/oder eine Funktion mittels der Sonderziele entlang der Fahrzeugroute FR gesucht werden und/oder eine Funktion mittels der die Zielführung gestoppt wird und/oder eine Funktion mittels der Verkehrsinformationen entlang der Fahrzeugroute FR angezeigt werden und/oder eine Funktion mittels der ein Zwischenziel angelegt werden kann. Die Bedienelemente BE können beispielsweise auf der signalisierten Karte K eingeblendet werden, wie in der Figur 1 zu sehen ist. Alternativ oder zusätzlich ist es möglich, dass bei der Auswahl des dritten Bedienbereichs B3 ein Menü geöffnet wird, das die Bedienelemente BE anzeigt. Zusätzlich kann das Exit-Bedienelement EX eingeblendet werden.

In einem Schritt S11 wird überprüft, ob der Fahrzeugführer wieder zu der Anzeige der Karte K zurückkehren will. Hierfür wird beispielsweise überprüft, ob das Exit-Bedienelement EX berührt wird. Ist dies der Fall, wird das Programm in einem Schritt S13 fortgeführt. Ist dies nicht der Fall, so wird auf eine Nutzereingabe gewartet.

In dem Schritt S13 werden die Visualisierungsdaten VD bereitgestellt zum Anzeigen der Karte K, des Fahrzeugsymbols FS und/oder der Fahrzeugroute FR. Alternativ werden die Bedienelemente BE ausgeblendet. Hierauf wird das Programm in dem Schritt S7 fortgeführt.

### Bezugszeichenliste

- AE: Anzeigeeinheit
- B1: erster Bedienbereich
- B2: zweiter Bedienbereich
- B3: dritter Bedienbereich
- BE: Bedienelement
- EX: Exitbedienelement
- FR: Fahrzeugroute
- FS: Fahrzeugsymbol
- K: Karte
- SV: Steuervorrichtung
- VD: Visualisierungsdaten

## Patentansprüche

1. Verfahren zum Betreiben einer Navigationseinrichtung, bei dem
- Visualisierungsdaten (VD) bereitgestellt werden zum Anzeigen auf einer Anzeigeeinheit (AE), wobei die Visualisierungsdaten (VD) Daten zum Anzeigen einer Karte (K), eines Fahrzeugsymbols (FS), und einer Fahrzeugroute (FR) aufweisen,
- ein erster Bedienbereich (B1) einem vorgegebenen Bereich auf der Anzeigeeinheit (AE) um das signalisierte Fahrzeugsymbol (FS) zugeordnet wird,
- ein dritter Bedienbereich (B3) einem vorgegebenen Bereich auf der Anzeigeeinheit (AE) um die signalisierte Fahrzeugroute (FR) außerhalb des ersten Bedienbereichs (B1) zugeordnet wird,
- ein zweiter Bedienbereich (B2) einem vorgegebenen Bereich auf der Anzeigeeinheit (AE) der restlichen signalisierten Karte (K) außerhalb des ersten und des dritten Bedienbereichs (B1, B2) zugeordnet wird,
- abhängig von einer Auswahl des jeweiligen Bedienbereichs (B1, B2, B3) jeweils zugehörige Funktionsdaten bereitgestellt werden zum Anzeigen auf der Anzeigeeinheit (AE), wobei die Funktionsdaten Daten zum Anzeigen von Bedienelementen (BE) aufweisen, die von einem Nutzer auswählbar sind, wobei den Bedienelementen (BE) dem jeweiligen Bedienbereich (B1, B2, B3) zugehörige Funktionen zugeordnet sind.

2. Verfahren nach Anspruch 1,
bei dem
- die dem ersten Bedienbereich (B1) zugeordneten Funktionen Fahrzeug und Umgebungsfunktionen repräsentieren zum Einstellen von Fahrzeug und umgebungsrelevanten Optionen der Navigationseinrichtung und
- die dem zweiten Bedienbereich (B2) zugehörigen Funktionen Kartenfunktionen repräsentieren zum Einstellen von Kartenoptionen der Navigationseinrichtung.

3. Verfahren nach Anspruch 1,
bei dem die dem dritten Bedienbereich (B3) zugehörigen Funktionen Routenfunktionen repräsentieren zum Einstellen von Routenoptionen der Navigationseinrichtung.

4. Verfahren nach einem der vorhergehenden Ansprüche, bei dem die Anzeigeeinheit (AE) als berührungsempfindlicher Bildschirm ausgebildet ist und die Auswahl des jeweiligen Bedienbereichs (B1, B2, B3) mittels Berührung des jeweiligen Bedienbereichs (B1, B2, B3) auf dem berührungsempfindlichen Bildschirm erfolgt.

5. Vorrichtung zum Betreiben einer Navigationseinrichtung, wobei die Vorrichtung dazu ausgebildet ist, ein Verfahren nach einem der Ansprüche 1 bis 4 auszuführen.

## Claims

1. A method for operating a navigation device,
in which
- visualisation data (VD) are provided to be displayed on a display unit (AE), wherein the visualisation data (VD) comprise data for displaying a map (K), a vehicle symbol (FS), and a vehicle route (FR),
- a first operating region (B1) is assigned to a predefined region on the display unit (AE) around the signalled vehicle symbol (FS),
- a third operating region (B3) is assigned to a predefined region on the display unit (AE) around the signalled vehicle route (FR) outside the first operating region (B1),
- a second operating region (B2) is assigned to a predefined region on the display unit (AE) of the remaining signalled map (K) outside the first and the third operating region (B1, B2),
- depending on a selection of a specific operating region (B1, B2, B3), associated functional data in each case are provided to be displayed on the display unit (AE), wherein the functional data comprise data for displaying operating elements (BE) that can be selected by a user, wherein the operating elements (BE) are assigned functions associated with the specific operating region (B1, B2, B3).

2. A method according to claim 1,
in which
- the functions assigned to the first operating region (B1) represent the vehicle and environment functions for setting vehicle and environment-relevant options of the navigation device, and
- the functions associated with the second operating region (B2) represent map functions for setting map options of the navigation device.

3. A method according to claim 1,
in which the functions associated with the third operating region represent route functions for setting route options of the navigation device.

4. A method according to any one of the preceding claims,
in which the display unit (AE) is designed as a touch-sensitive screen and the specific operating region (B1, B2, B3) is selected by touching the specific operating region (B1, B2, B3) on the touch-sensitive screen.

5. A device for operating a navigation device,
wherein the device is designed to carry out a method according to any one of claims 1 to 4.

## Revendications

1. Procédé de gestion d'une installation de navigation selon lequel :
- on fournit les données de visualisation (VD) pour afficher sur une unité d'affichage (AE), les données de visualisation (VD) comportant les données d'affichage d'une carte (K), d'un symbole de véhicule (FS) et d'un trajet de véhicule (FR),
- une première zone de manoeuvre (B1) dans une zone prédéfinie de l'unité d'affichage (AE) pour associer le symbole de véhicule signalé (FS),
- une troisième zone de manoeuvre (B3) avec une zone prédéfinie sur l'unité d'affichage (AE) pour associer le trajet signalé du véhicule (FR) en dehors de la première zone de manoeuvre (B1),
- une seconde zone de manoeuvre (B2) associée à une zone prédéfinie sur l'unité d'affichage (AE) de la carte résiduelle signalée (K) résiduelle en dehors de la première et de la troisième zones de manoeuvre (B1, B3),
- en fonction d'un nombre de zones de manoeuvres respectives (B1, B2, B3), fournir chaque fois les données de fonctions correspondantes pour l'affichage sur l'unité d'affichage (AE), les données de fonction ayant des données pour l'affichage des éléments de manoeuvre (BE) qui peuvent être choisis par l'utilisateur, les éléments de manoeuvre (BE) étant associés à des fonctions de la zone de manoeuvre respective (B1, B2, B3).

2. Procédé selon la revendication 1,
selon lequel
- les fonctions associées à la première zone de manoeuvre (B1) sont des fonctions représentant le véhicule et des fonctions d'environnement pour régler le véhicule et les options concernant l'environnement de l'installation de navigation, et
- les fonctions associées à la seconde zone de manoeuvre (B2) sont des fonctions cartographiques représentées pour régler les options cartographiques de l'installation de navigation.

3. Procédé selon la revendication 1,
**caractérisé en ce que**
les fonctions associées à la troisième zone de manoeuvre (B3) sont des fonctions de trajet représentées pour établir les options de trajet de l'installation de navigation.

4. Procédé selon l'une des revendications précédentes,
selon lequel l'unité d'affichage (AE) est un écran tactile et la sélection de la zone de manoeuvre (B1, B2, B3) respective se fait par le toucher de la zone de manoeuvre respective (B1, B2, B3) sur l'écran tactile.

5. Dispositif de gestion d'une installation de navigation, ce dispositif étant conçu pour appliquer le procédé selon l'une des revendications 1 à 4.
